# EUROPÄISCHE PATENTSCHRIFT

(11) **EP 2 328 261 B1**
(45) Veröffentlichungstag und Bekanntmachung des Hinweises auf die Patenterteilung: **08.01.2020**
(21) Anmeldenummer: 10014735.4
(22) Anmeldetag: 18.11.2010
(51) Int. Cl.: H02K 7/06, H02K 7/102, F03D 7/02

(54) **Elektrischer Stellantrieb**
Electric actuator
Actionneur électrique

(30) Priorität: 26.11.2009 DE 102009055708
(43) Veröffentlichungstag der Anmeldung: 01.06.2011
(73) Patentinhaber: Krebs & Aulich GmbH, 38855 Wernigerode (DE)
(72) Erfinder: Witte, Friedrich, 38889 Blankenburg (DE); Krebs, Jörg-H., 38895 Derenburg (DE)
(74) Vertreter: Sturm, Christoph

(56) Entgegenhaltungen:
- WO-A1-83/00195
- DE-A1- 4 221 783
- GB-A- 2 022 534
- US-A- 2 370 135

## Beschreibung

Die Erfindung betrifft einen elektrischen Stellantrieb eines rotierenden Systems.

Innerhalb eines rotierenden Systems kann es erforderlichen sein, eine erste Baugruppe oder mehrere erste Baugruppen des rotierenden Systems gegenüber einer oder mehreren zweiten Baugruppen des rotierenden Systems zu verstellen. Als Beispiel eines rotierenden Systems sei hier eine Windkraftanlage genannt, bei welcher zum Beispiel die rotorseitigen Flügel gegenüber einem Rotorgrundkörper, an welchem dieselben gelagert sind, verlagert werden müssen, um die Flügel für den Betrieb optimal auszurichten. Zur Verlagerung der rotorseitigen Flügel einer Windkraftanlage gegenüber dem rotorseitigen Rotorgrundkörper derselben dient dann typischerweise ein elektrischer Stellantrieb.

Bei aus der Praxis bekannten Anwendungen ist ein Stator bzw. Ständer einer elektrischen Maschine eines elektrischen Stellantriebs, welcher der Positionierung mindestens einer ersten Baugruppe des rotierenden System gegenüber mindestens einer zweiten Baugruppe desselben dient, dem rotierenden System zugeordnet, wobei die Übertragung der Stellenergie ins rotierende System Schwierigkeiten bereitet. Nach der Praxis werden zur Stellenergieübertragung ins rotierende System Schleifringe oder rotierende Übertrager oder auch Drehdurchführungen genutzt. Diese Art der Stellenergieübertragung ist jedoch aufwendig, verschleißbehaftet und teuer. Es besteht daher Bedarf an einem elektrischen Stellantrieb eines rotierenden Systems, der die obigen Nachteile vermeidet.

Ein elektrischer Stellantrieb gemäß Oberbegriff des Anspruchs 1 ist aus der US 2 370 135 A bekannt. Aus der DE 42 21 7783 A1, der WO 83/00195 A1 und aus der GB 2 022 534 A sind weitere elektrische Stellantriebe nach dem Stand der Technik bekannt.

Hiervon ausgehend liegt der vorliegenden Erfindung das Problem zu Grunde einen neuartigen elektrischen Stellantrieb eines rotierenden Systems zu schaffen.

Dieses Problem wird durch einen elektrischen Stellantrieb gemäß Patentanspruch 1 gelöst.

Beim erfindungsgemäßen, elektrischen Stellantrieb wird die von der elektrischen Maschine desselben bereitgestellte Stellenergie durch den zwischen dem Stator bzw. Ständer der elektrischen Maschine und dem Rotor bzw. Läufer derselben ausgebildeten Luftspalt des rotierendes System, mit welchem eine Positionieraufgabe durchzuführen ist, übertragen. Zur Stellenergieübertragung sind keine Schleifringe oder rotierenden Übertrager oder Drehdurchführungen erforderlich. Der elektrische Stellantrieb ist einfach, zuverlässig und weniger verschleißbehaftet als aus der Praxis bekannte Lösungen.

Mithilfe des elektrischen Stellantriebs kann mindestens eine erste Baugruppe des rotierenden Systems gegenüber mindestens einer zweiten Baugruppe desselben linear und/oder drehend positioniert werden.

Die elektrische Maschine ist als Asynchronmaschine ausgebildet, wobei der Rotor derselben Wicklungen aufweist, die an einen zusammen mit dem Rotor rotierenden Gleichrichter gekoppelt sind, der eine in den Wicklungen des Rotors induzierte Wechselspannung in eine Gleichspannung zur Bestromung einer dem Aktuator zugeordneten Bremseinrichtung wandelt, wobei die Bremseinrichtung in einem ersten Bestromungszustand, insbesondere in einem unbestromten Zustand, derselben die lineare und/oder drehende Positionierung über den Stellantrieb verhindert und in einem zweiten Bestromungszustand dieselbe zulässt.

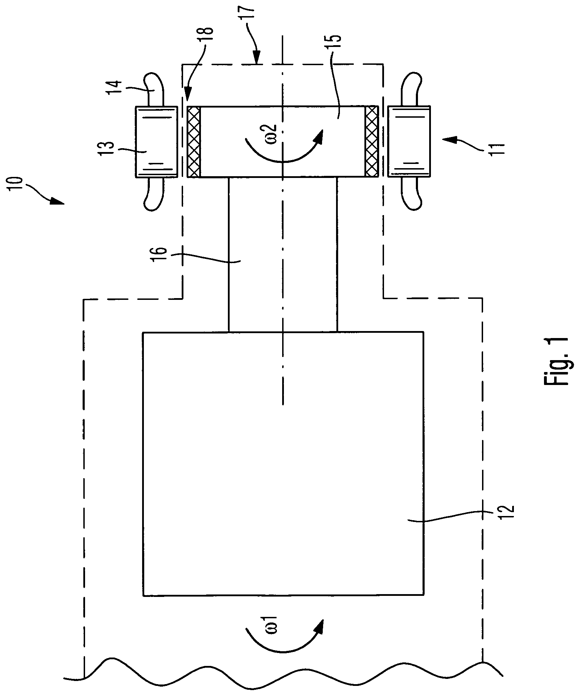

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Die Figuren 1 bis 3 und 5 der Zeichnung zeigen Ausführungsbeispiele, die nicht Gegenstand der Erfindung sind, deren Erläuterung aber zum besseren Verständnis der Erfindung beiträgt.

Dabei zeigt:
- Fig. 1: eine schematisiere Darstellung eines Ausführungsbeispiels eines elektrischen Stellantriebs eines rotierenden Systems;
- Fig. 2: eine schematisiere Darstellung eines Ausführungsbeispiels eines elektrischen Stellantriebs eines rotierenden Systems;
- Fig. 3: eine schematisiere Darstellung eines Ausführungsbeispiels eines elektrischen Stellantriebs eines rotierenden Systems;
- Fig. 4: eine schematisiere Darstellung eines Ausführungsbeispiels eines erfindungsgemäßen elektrischen Stellantriebs eines rotierenden Systems; und
- Fig. 5: eine schematisiere Darstellung eines weiteren Ausführungsbeispiels eines elektrischen Stellantriebs eines rotierenden Systems.

Die hier vorliegende Erfindung betrifft einen elektrischen Stellantrieb eines rotierenden Systems zur Positionierung mindestens einer ersten Baugruppe des rotierenden Systems gegenüber mindestens einer zweiten Baugruppe desselben. Es kann sich beim rotierenden System zum Beispiel um eine Windkraftanlage handeln, die über statorseitige Baugruppen sowie rotorseitige Baugruppen verfügt, wobei dann ein erfindungsgemäßer, elektrischer Stellantrieb zum Beispiel der Positionierung von als ersten Baugruppen ausgebildeten, rotierenden Flügeln gegenüber einem als zweite Baugruppe ausgebildeten Rotorgrundkörper der Windkraftanlage dient.

Nachfolgend werden unter Bezugnahme auf Fig. 1 bis 5 unterschiedliche Ausführungsbeispiele elektrischer Stellantriebe beschrieben.

Fig. 1 zeigt ein erstes Ausführungsbeispiel eines elektrischen Stellantriebs 10, welcher der Positionierung mindestens einer ersten, rotorseitigen Baugruppe gegenüber mindestens einer zweiten, rotorseitigen Baugruppe dient, wobei der elektrische Stellantrieb 10 der Fig. 1 über eine elektrische Maschine 11 und einen Aktuator 12 verfügt. Die elektrische Maschine 11 verfügt über einen Ständer bzw. Stator 13 mit Ständerwicklungen bzw. Statorwicklungen 14 sowie über einen Läufer bzw. Rotor 15, wobei der Läufer bzw. Rotor 15 der elektrischen Maschine 11 mit dem Aktuator 12 im Ausführungsbeispiel der Fig. 1 über eine Rotorwelle 16 gekoppelt ist.

In Fig. 1 ist eine Systemgrenze 17 zwischen sich drehenden bzw. rotorseitigen Baugruppen und stehenden bzw. statorseitigen Baugruppen des elektrischen Stellantriebs 10 schematisiert durch eine gestrichelte Linie gezeigt, wobei sich gemäß Fig. 1 diese Systemgrenze 17 durch einen zwischen dem Ständer bzw. Stator 13 und dem Läufer bzw. Rotor 15 der elektrischen Maschine 11 ausgebildeten Luftspalt 18 erstreckt.

Der Aktuator 12 sowie der Läufer bzw. Rotor 15 des elektrischen Stellantriebs 10 sind miteinander gekoppelt, nämlich derart, dass in einem ersten Bestromungszustand der elektrischen Maschine 11, nämlich der Ständerwicklungen bzw. Statorwicklungen 14 derselben, der Läufer bzw. Rotor 15 der elektrischen Maschine 11 und der Aktuator 12 mit identischer Drehzahl und in einem zweiten Bestromungszustand derselben mit unterschiedlicher Drehzahl rotieren. Vorzugsweise rotieren der Läufer bzw. Rotor 15 der elektrischen Maschine 11 und der Aktuator 12 dann mit identischer Drehzahl, wenn die Ständerwicklungen bzw. Statorwicklungen 14 der elektrischen Maschine 11 nicht bestromt sind.

Dann, wenn der Läufer bzw. Rotor 15 der elektrischen Maschine 11 und der Aktuator 12 mit identischer Drehzahl rotieren, wird über den elektrischen Stellantrieb 10 keine Positionierung von zueinander zu verlagernden Baugruppen des rotierenden System vorgenommen. Eine derartige Positionierung erfolgt nur dann, wenn der Läufer bzw. Rotor 15 der elektrischen Maschine 11 und der Aktuator 12 mit einer unterschiedlichen Drehzahl rotieren, was vorzugsweise dann der Fall ist, wenn die Ständerwicklungen bzw. Statorwicklungen 14 des Ständers bzw. Stators 13 der elektrischen Maschine 11 bestromt sind.

In diesem Fall kann über den Stellantrieb 10 eine Positionierung der oder jeder ersten, rotierenden Baugruppe des rotierenden Systems gegenüber der oder jeden zweiten, rotierenden Baugruppe des rotierenden Systems vorgenommen werden, nämlich im Ausführungsbeispiel der Fig. 1 eine drehende bzw. rotatorische Positionierung der jeweiligen Baugruppen zueinander.

Fig. 1 kann entnommen werden, dass die Stellenergie des elektrischen Stellantriebs 10, die zur Erhöhung oder Reduzierung der Drehzahl des Läufers bzw. Rotors 15 der elektrischen Maschine 11 gegenüber der Drehzahl des Aktuators 12 benötigt wird, um eine Drehzahldifferenz zwischen denselben zur Durchführung einer Positionieraufgabe bereitzustellen, durch den Luftspalt 18 der elektrischen Maschine 11 übertragen wird, der zwischen dem Läufer bzw. Rotor 15 und dem Ständer bzw. Stator 13 der elektrischen Maschine 11 ausgebildet ist.

Die Stellenergie wird demnach durch den Luftspalt 18 der elektrischen Maschine 11 übertragen, sodass keinerlei Schleifringe oder rotierende Übertrager oder Drehdurchführungen zur Stellenergieübertragung erforderlich sind.

Wie bereits ausgeführt, erfolgt dann, wenn im Ausführungsbeispiel der Fig. 1 der Läufer bzw. Rotor 15 der elektrischen Maschine 11 und der Aktuator 12 unterschiedliche Drehzahlen ω1 und ω2 aufweisen, eine drehende Positionierung bzw. Verlagerung der oder jeder ersten rotierenden Baugruppe des rotierenden Systems gegenüber der oder jeder zweiten, rotierenden Baugruppen desselben erfolgt.

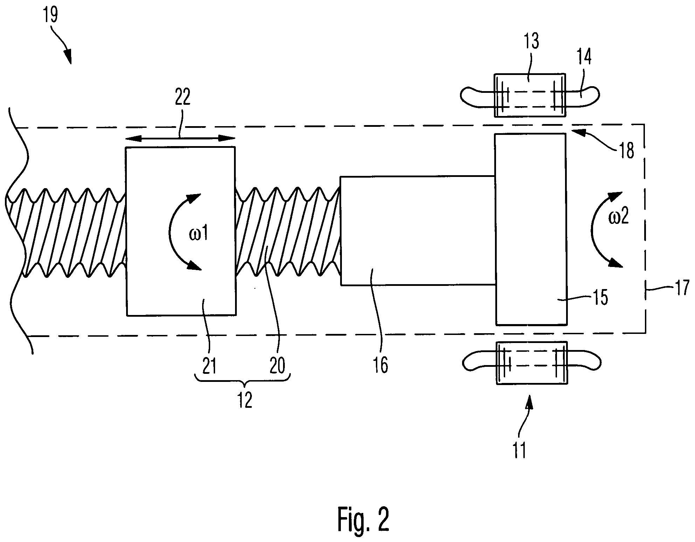

Demgegenüber zeigt Fig. 2 ein Ausführungsbeispiel eines elektrischen Stellantriebs 19, in welchem dann, wenn der Läufer bzw. Rotor 15 der elektrischen Maschine 11 und der Aktuator 12 mit unterschiedlichen Drehzahlen ω1 und ω2 rotieren, eine lineare Positionierung mindestens einer ersten, rotorseitigen Baugruppe des rotierenden Systems gegenüber mindestens einer zweiten, rotorseitigen Baugruppe desselben erfolgen kann, nämlich dadurch, dass der Aktuator 12 von einer Gewindespindel 20 und einer auf der Gewindespindel 20 mit der Drehzahl ω1 rotierenden Spindelmutter 21 gebildet wird, wobei die Gewindespindel 20 über die Rotorwelle 16 mit dem Läufer bzw. Rotor 15 der elektrischen Maschine 11 gekoppelt ist. In diesem Fall kann dann, wenn die auf der Gewindespindel 20 gelagerte Spindelmutter 21 des Aktuators 12 und der Läufer bzw. Rotor 15 der elektrischen Maschine 11 mit den unterschiedlichen Drehzahlen ω1 und ω2 rotieren, im Sinne des Doppelpfeils 22 eine lineare Positionieraufgabe übernommen werden, wobei die Positionierungsrichtung vom Größenverhältnis der Drehzahlen ω1 und ω2 sowie von der Neigungsrichtung der Gewindespindel 20 abhängt.

Im Unterschied zu den in Fig. 1 und 2 gezeigten Ausführungsbeispielen der elektrischen Stellantriebe 10 und 19 ist es möglich, den Läufer bzw. Rotor 15 der elektrischen Maschine 11 und den Aktuator 12 über ein Übersetzungsgetriebe oder über einen Kurbeltrieb oder einen hydraulischen Kraftübertrager miteinander zu koppeln, um so unter Verwendung des Übersetzungsgetriebes oder Kurbeltriebs oder hydraulischen Stellkraftübertragers eine lineare und/oder drehende Positionieraufgabe zu übernehmen.

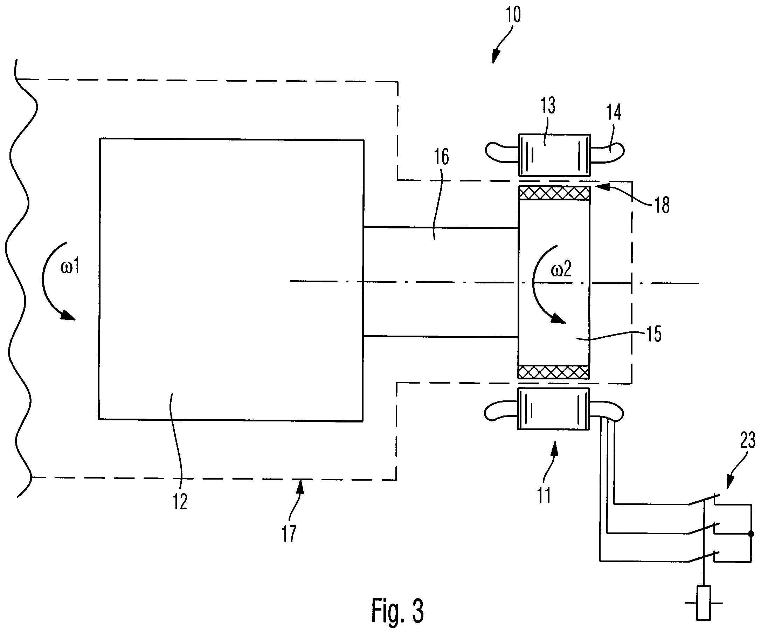

Fig. 3 zeigt ein Ausführungsbeispiel eines Stellantriebs 10 auf Grundlage des Ausführungsbeispiels der Fig. 1, wobei im Ausführungsbeispiel der Fig. 3 die elektrische Maschine 11 als permanentmagnetisch erregte Synchronmaschine ausgebildet ist, derer Ständerwicklungen bzw. Statorwicklungen 14 ein Schütz 23 zugeordnet ist. Im bevorzugten Ausführungsbeispiel ist das Schütz 23 bestromt und im bestromten Zustand geöffnet, wobei dann, wenn das Schütz 23 im Kurzschlussfall bzw. unbestromten Zustand schließt, die Ständerwicklungen bzw. Statorwicklungen 14 der elektrischen Maschine kurzgeschlossen sind, wobei ein sich hierbei ausbildendes Kurzschlussmoment der elektrischen Maschine 11 genutzt werden kann, um eine Drehzahldifferenz zwischen dem Läufer bzw. Rotor 15 der elektrischen Maschine 11 und dem Aktuator 12 aufzubauen, um so bedingt durch das Kurzschlussmoment der elektrischen Maschine 11 die jeweilige erste, rotierende Baugruppe des rotierenden Systems gegenüber der jeweiligen zweiten, rotierenden Baugruppe desselben in eine Sicherheitsposition zu überführen.

Im Fehlerfall kann dann durch Ausnutzen des Kurzschlussmoments der als permanentmagnetisch erregte Synchronmaschine ausgebildeten, elektrischen Maschine 11 eine sichere Anlage bzw. Sicherheitsposition der zueinander zu positionierenden Baugruppen des rotierenden Systems eingestellt werden. Im stromlosen Abfall des Schützes 23 kann ohne weitere Fremdenergie alleine aufgrund der Rotationsenergie des rotierenden Systems bzw. des Stellantriebs Stellenergie bereitgestellt werden, um die Sicherheitspositionierung zu bewerkstelligen.

Diese Sicherheitspositionierung über ein Schütz kann auch dann realisiert werden, wenn die elektrische Maschine 11 als Asynchronmaschine ausgeführt ist. In diesem Fall sind dann dem Schütz ein Kondensator und gegebenenfalls ein elektrischer Widerstand zugeordnet, wobei dann im Fehlerfall die kondensatorerregte Asynchronmaschine über ein generatorisches Moment der elektrischen Maschine 11 die Sicherheitspositionierung ausführt.

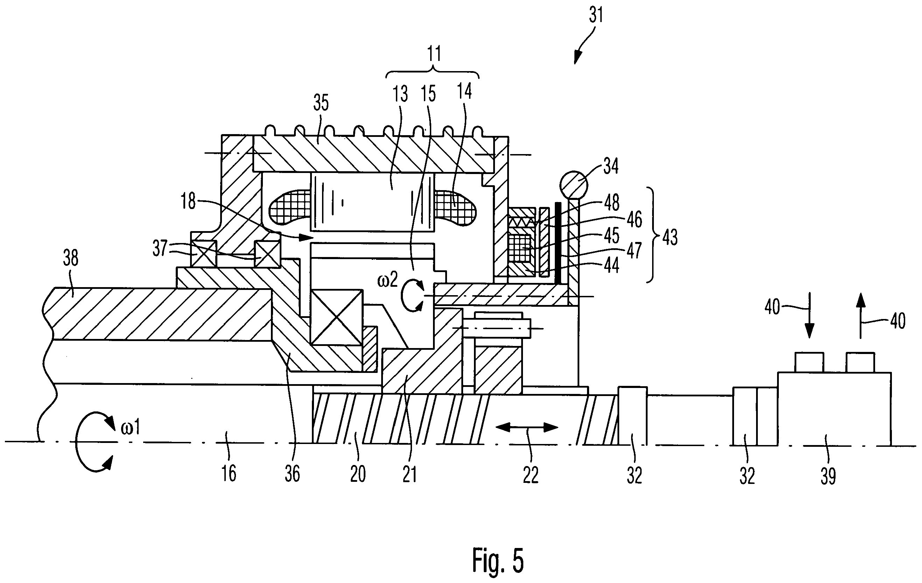

Eine weitere Möglichkeit zur Realisierung der Sicherheitspositionierung über eine Bremseinrichtung wird weiter unten unter Bezugnahme auf Fig. 5 beschrieben.

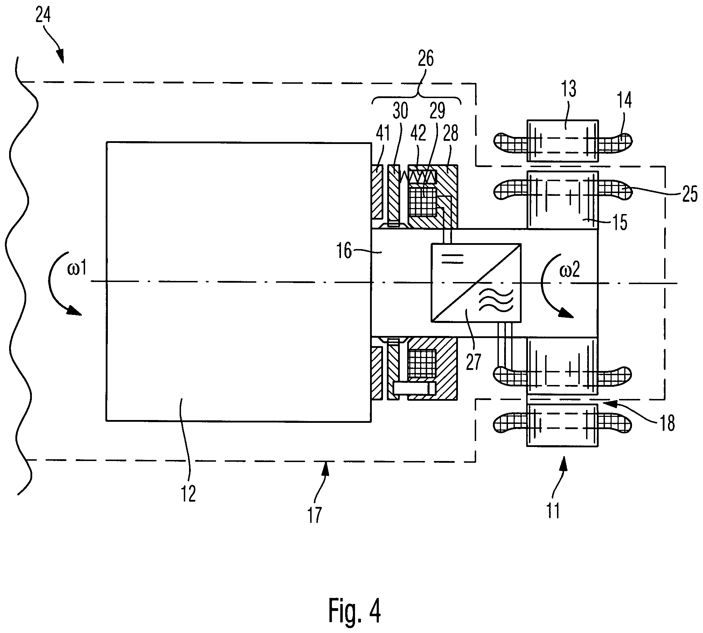

Ein Ausführungsbeispiel eines erfindungsgemäßen, elektrischen Stellantriebs 24 auf Basis des Ausführungsbeispiels der Fig. 1 zeigt Fig. 4, wobei im Ausführungsbeispiel der Fig. 4 die elektrische Maschine 11 als Asynchronmaschine ausgebildet ist, deren Ständer bzw. Stator 13 die Ständerwicklungen bzw. Statorwicklungen 14 und deren Läufer bzw. Rotor 15 Läuferwicklungen bzw. Rotorwicklungen 25 trägt.

Eine Asynchronmaschine verfügt, wie bereits erwähnt, über die Ständerwicklungen bzw. Statorwicklungen 14 im Ständer bzw. Stator 13 und die Läuferwicklungen bzw. Rotorwicklungen 25 im Läufer bzw. Rotor 15 der elektrischen Maschine 11. Unterscheiden sich die Winkelgeschwindigkeiten eines Flusses des Ständers bzw. Stators 13 und des Läufers bzw. Rotors 15 der Asynchronmaschine, so wird in den Läuferwicklungen bzw. Rotorwicklungen 25 eine Spannung induziert.

Bei kurzgeschlossenen Läuferwicklungen bzw. Rotorwicklungen 25 bildet sich ein Kurzschlussstrom, welcher zusammen mit dem Statorfluss eine Umfangskraft bzw. ein Drehmoment entstehen lässt. Bei Ausführung der Rotorwicklungen 25 mit offenen Strangenden, lässt sich der entstehende Drehstrom gleichrichten und zur Betätigung z. B. einer elektromagnetisch betätigten Bremseinrichtung 26 im rotierenden System nutzen.

Ohne weitere Steuerung ist somit die Drehmomentbildung in der als Asynchronmaschine ausgebildeten elektrischen Maschine 11 mit einer Betätigung, vorzugsweise Öffnung, der elektromagnetisch betätigten, vorzugsweise elektromagnetisch geöffneten, Bremseinrichtung 26 verknüpft.

Bei der Asynchronmaschine des Ausführungsbeispiels der Fig. 4 kann demnach in den Läuferwicklungen bzw. Rotorwicklungen 25 eine Wechselspannung induziert werden, welche dazu genutzt werden kann, um eine mit dem Aktuator 12 zusammenwirkende Bremseinrichtung 26 zu bestromen und in Folge dessen insbesondere zu öffnen. So sind im Ausführungsbeispiel der Fig. 4 die Läuferwicklungen bzw. Rotorwicklungen 25 des Rotors 15 der elektrischen Maschine 11 an einen Gleichrichter 27 gekoppelt, der die in den Läuferwicklungen bzw.

Rotorwicklungen 25 induzierte Wechselspannung in eine Gleichspannung zur Bestromung der Bremseinrichtung 26 wandelt.

Dann, wenn die Bremseinrichtung 26 einen ersten Bestromungszustand aufweist und dann insbesondere geöffnet ist, lässt dieselbe bei einer Drehzahldifferenz zwischen den Drehzahlen ω1 und ω2 von Läufer bzw. Rotor 15 der elektrischen Maschine 11 und Aktuator 12 die Ausführung einer linearen und/oder drehenden Positionieraufgabe zu. Dann hingegen, wenn die Bremseinrichtung 26 einen zweiten Bestromungszustand aufweist, insbesondere unbestromt ist, und dann insbesondere geschlossen ist, verhindert dieselbe diese lineare und/oder drehende Positionierung, und zwar dadurch, dass die Bremseinrichtung 26 in geschlossenem Zustand die Einstellung einer Winkelgeschwindigkeitsdifferenz ω1 und ω2 verhindert.

In diesem Fall wird dann nicht nur die Stellenergie zur Erhöhung oder Reduzierung der Drehzahl ω2 des Läufers bzw. Rotors 15 der elektrischen Maschine 11 gegenüber der Drehzahl ω1 des Aktuators 12 über den Luftspalt 18 der elektrischen Maschine 11 übertragen, sondern vielmehr auch die Energie zur Bestromung der Bremseinrichtung 26.

Im Ausführungsbeispiel der Fig. 4 ist der Gleichrichter 27 in die Rotorwelle 16 integriert und demnach als rotierendes Bauteil ausgeführt. Die Bremseinrichtung 26 verfügt über einen Bremsmagneten 28, eine Bremsmagnetspule 29, eine Bremsscheibe 30 und eine mit der Bremsscheibe 30 zusammenwirkende, dem Aktuator 12 zugeordnete Reibfläche 41, und ein Federelement 42.

Im vorzugsweise unbestromten Zustand der Bremseinrichtung 26 wird die federbeaufschlagte Bremsscheibe 30 vom Federelement 42 gegen den Aktuator 12, nämlich die demselben zugeordnete Reibfläche 41 gedrückt, so sich bei geschlossener Bremseinrichtung 26 keine Differenz zwischen den Drehzahlen ω1 und ω2 aufbauen und so eine Positionierung nicht erfolgen kann.

Dann hingegen, wenn der Gleichrichter 27 die Bremseinrichtung 26 ausreichend bestromt, um die auf die federbeaufschlagte Bremsscheibe 30 wirkende Federkraft des Federelements 42 zu überwinden, wird die Bremsscheibe 30 vom Bremsmagneten 29 angezogen und von der Reibfläche 41 abgehoben, um so den Aktuator 12 freizugeben und eine Drehzahldifferenz zwischen den Drehzahlen ω1 und ω2 zur Durchführung der Positionieraufgabe zu ermöglichen.

Im Ausführungsbeispiel der Fig. 4 ist es demnach möglich, über den elektrischen Stellantrieb 24 bzw. die Bremseinrichtung 26 desselben eine Positionierung zu verhindern. Dann, wenn die Bremseinrichtung 26 über den Gleichrichter 27 ausreichend bestromt und geöffnet wird, gibt die Bremseinrichtung 26 den Aktuator 12 frei und ermöglicht so die Durchführung der Positionieraufgabe.

Bei der in Fig. 4 gezeigten, elektromagnetisch betätigten Bremseinrichtung 26 handelt es sich um ein exemplarisches Ausführungsbeispiel derselben.

Ein weiteres Ausführungsbeispiel eines Stellantriebs 31 zeigt Fig. 5, wobei der Stellantrieb 31 der Fig. 5 ebenso wie der Stellantrieb 19 der Fig. 2 der Ausführung einer linearen Positionierung zwischen rotorseitigen Baugruppen eines rotierenden Systems dient.

Dabei ist im Unterschied zum Ausführungsbeispiel der Fig. 2 der Läufer bzw. Rotor 15 der elektrischen Maschine 11 mit der Spindelmutter 21 fest verbunden, sodass im Ausführungsbeispiel der Fig. 5 bei einer Drehzahldifferenz zwischen den Drehzahlen ω1 und ω2 nicht die Spindelmutter 21 im Sinne des Doppelpfeils 22 linear verlagert wird, sondern vielmehr die Gewindespindel 20.

Im Ausführungsbeispiel der Fig. 5 sind der Gewindespindel 20 zwei Sensoren 32 zugeordnet, mithilfe derer die lineare Verlagerung der Gewindespindel 20 im Sinne des Doppelpfeils 22 detektiert bzw. überwacht werden kann, um so auf Grundlage der von den Sensoren 32 bereitgestellten Messsignale zur Durchführung einer Positionieraufgabe die Bestromung der elektrischen Maschine 11 zu steuern bzw. zu regeln.

Im Ausführungsbeispiel der Fig. 5 wird über eine Sicherungsmutter 33, die mit der Spindelmutter 21 sowie mit dem Läufer bzw. Rotor 15 der elektrischen Maschine 11 gekoppelt ist, im Fehlerfall ein Anschlag bereitgestellt.

Über eine dem Läufer bzw. Rotor 15 zugeordnete Betätigungseinrichtung 34 ist ein Zugriff auf den Stellantrieb 31 möglich, um unabhängig von der Bestromung der elektrischen Maschine 11 eine manuelle Hilfspositionierung der rotierenden Baugruppen des rotierenden Systems zueinander vorzunehmen.

Weiterhin zeigt Fig. 5 ein statorseitiges Gehäuse 35 für den Ständer bzw. Stator 13 der elektrischen Maschine 11, welches über Lager 37 an einem rotorseitigen Zwischenflansch 36 und einer Hohlwelle 38 abgestützt ist.

Über die Lager 37 besteht die Möglichkeit, das statorseitige Gehäuse 35 direkt auf dem rotierenden Teilsystem anzubringen, sodass auf eine aufwendige Anbringung und deren Ausrichtung verzichtet werden kann. Dabei kann das Stellmoment, welches auf das statorseitige Gehäuse 35 wirkt, von einer Momentenstütze abgeleitet bzw. aufgefangen werden, wobei sich die Momentenstütze im nicht rotierenden System abstützt bzw. im nicht rotierenden System verankert ist.

Im Ausführungsbeispiel der Fig. 5 ist der Gewindespindel 20 weiterhin eine Drehdurchführung 39 zugeordnet, über welche zum Beispiel ein Fluid 40, insbesondere ein Hydraulikfluid, in das rotierende System eingeführt bzw. ausgeführt werden kann.

In Fig. 5 ist als Weiterbildung des dort gezeigten Stellantriebes 31 eine Bremseinrichtung 43 dargestellt, mit Hilfe derer im Fehlerfall eine Sicherheitspositionierung analog zum Ausführungsbeispiel der Fig. 3, jedoch ohne Verwendung eines Schützes, realisiert werden kann. Die Bremseinrichtung 43 ist zwischen dem Gehäuse 35 des Stators und dem Rotor 15 bzw. Läufer der elektrischen Maschine 11 angeordnet. Die Bremseinrichtung 43 ist elektromagnetisch betätigt und verfügt über einen Bremsmagneten 44, eine Bremsmagnetspule 45, eine Bremsscheibe 46 und eine mit der Bremsscheibe 46 zusammenwirkende Reibfläche 47 und ein Federelement 48.

Im Normalbetrieb, vorzugsweise strombetätigt, ist die Bremseinrichtung 43 geöffnet. Bei Eintritt eines Fehlerfalles bzw. Ausbleiben der Öffnungsleistung, drückt das Federelement 38 die Bremsscheibe 46 gegen die Reibfläche 47 und erzeugt damit ein Stellmoment analog dem Kurschlussmoment in Fig. 3, welches solange die zum Erreichen einer sicheren Position erforderliche Winkelgeschwindigkeitsdifferenz zwischen den Drehzahlen ω1 und ω2 hervorruft, bis die Winkelgeschwindigkeit des rotierenden Systems gleich Null ist. Dass Erreichen einer z. B. für eine Windkraftanlage oder eine Wasserkraftanlage sicheren Position der Rotorbeflügelung bzw. -beschaufelung wäre somit ohne Energiezufuhr über den Stellmotor gesichert.

Sämtlichen Ausführungsbeispielen der gezeigten elektrischen Stellantriebe ist gemeinsam, dass eine Stellenergie für den Stellantrieb, welche zur Verlangsamung oder Beschleunigung des Läufers bzw. Rotors 15 der elektrischen Maschine 11 gegenüber einem Aktuator 12 und damit zur Bereitstellung einer Drehzahldifferenz zwischen denselben benötigt wird, über den Luftspalt 18 der elektrischen Maschine 11 übertragen wird. Dann, wenn eine solche Drehzahldifferenz vorliegt, ist die Ausführung einer linearen und/oder drehenden Positionieraufgabe möglich. Dann, wenn eine solche Drehzahldifferenz nicht vorliegt, ist die Ausführung einer linearen und/oder drehenden Positionieraufgabe nicht möglich. Je nach Stellrichtung wird Energie, nämlich das Produkt aus der Drehzahl ω2, einem Stellmoment und einer Stellzeit, entweder dem rotierenden System zugeführt oder von demselben abgeführt. Das Abführen von Energie aus dem rotierenden System erfolgt insbesondere bei der Sicherheitspositionierung über das Schütz 23 der Fig. 3 oder die Bremseinrichtung 43 der Fig. 5.

Die elektrischen Maschinen 11 können, wie gezeigt, als Innenläufermotoren mit zylindrischen Luftspalten oder als Außenläufermotoren sowie als sogenannte Scheibenläufermotoren ausgeführt sein.

### Bezugszeichenliste

- 10: elektrischer Stellantrieb
- 11: elektrische Maschine
- 12: Aktuator
- 13: Ständer / Stator
- 14: Ständerwicklungen / Statorwicklungen
- 15: Läufer / Rotor
- 16: Rotorwelle
- 17: Systemgrenze
- 18: Luftspalt
- 19: elektrischer Stellantrieb
- 20: Gewindespindel
- 21: Spindelmutter
- 22: Doppelpfeil
- 23: Schütz
- 24: elektrischer Stellantrieb
- 25: Läuferwicklungen / Rotorwicklungen
- 26: Bremseinrichtung
- 27: Gleichrichter
- 28: Bremsmagnet
- 29: Bremsmagnetspule
- 30: Bremsscheibe
- 31: elektrischer Stellantrieb
- 32: Sensor
- 33: Sicherungsmutter
- 34: Betätigungseinrichtung
- 35: Gehäuse
- 36: Zwischenflansch
- 37: Lager
- 38: Hohlwelle
- 39: Drehdurchführung
- 40: Fluid
- 41: Reibfläche
- 42: Federelement
- 43: Bremseinrichtung
- 44: Bremsmagneten
- 45: Bremsmagnetspule
- 46: Bremsscheibe
- 47: Reibfläche
- 48: Federelement

## Patentansprüche

1. Elektrischer Stellantrieb eines rotierenden Systems zur Positionierung mindestens einer ersten Baugruppe des rotierenden Systems gegenüber mindestens einer zweiten Baugruppe des rotierenden Systems, mit einer einen Stator (13) und einen Rotor (15) mit Wicklungen (25) aufweisenden elektrischen Maschine (11) sowie mit einem Aktuator (12), wobei der Rotor (15) der elektrischen Maschine (11) und der Aktuator (12) derart miteinander gekoppelt sind, dass in einem ersten Bestromungszustand der elektrischen Maschine (11) der Rotor (15) derselben und der Aktuator (12) mit identischer Drehzahl rotieren, und dass in einem zweiten Bestromungszustand der elektrischen Maschine (11) der Rotor (15) derselben und der Aktuator (12) mit einer unterschiedlichen Drehzahl rotieren, wobei dann, wenn der Rotor (15) der elektrischen Maschine (11) und der Aktuator (12) mit einer unterschiedlichen Drehzahl rotieren, über den Stellantrieb eine lineare und/oder drehende Positionierung der oder jeden ersten rotierenden Baugruppe gegenüber der oder jeder zweiten rotierenden Baugruppe des rotierenden Systems vornehmbar ist, und wobei die elektrische Maschine (11) die Stellenergie zur Erhöhung oder Reduzierung der Drehzahl des Rotors (15) der elektrischen Maschine gegenüber der Drehzahl des Aktuators (12) durch einen zwischen dem Stator (13) der elektrischen Maschine (11) und dem Rotor (15) derselben ausgebildeten Luftspalt (18) überträgt, und mit einer dem Aktuator (12) zugeordneten Bremseinrichtung (26), die in einem ersten Bestromungszustand, insbesondere in einem unbestromten Zustand, derselben die lineare und/oder drehende Positionierung über den Stellantrieb verhindert und in einem zweiten Bestromungszustand dieselbe zulässt, **dadurch gekennzeichnet, dass** die elektrische Maschine (11) als Asynchronmaschine ausgebildet ist, und die Wicklungen (25) des Rotors (15) an einen zusammen mit dem Rotor (15) rotierenden Gleichrichter (27) gekoppelt sind, der eine in den Wicklungen (25) des Rotors induzierte Wechselspannung in eine Gleichspannung zur Bestromung der Bremseinrichtung (26) wandelt.

2. Elektrischer Stellantrieb nach Anspruch 1, **dadurch gekennzeichnet, dass** der Aktuator (12) eine Gewindespindel (20) und eine auf derselben gelagerte Spindelmutter (21) umfasst.

3. Elektrischer Stellantrieb nach Anspruch 1, **dadurch gekennzeichnet, dass** der Rotor der elektrischen Maschine und der Aktuator über ein Übersetzungsgetriebe gekoppelt sind.

4. Elektrischer Stellantrieb nach Anspruch 1, **dadurch gekennzeichnet, dass** der Rotor der elektrischen Maschine und der Aktuator über ein Fluidübertrager gekoppelt sind.

5. Elektrischer Stellantrieb nach einem der Ansprüche 1 bis 4, **dadurch gekennzeichnet, dass** Wicklungen (14) des Stators der elektrischen Maschine (11) ein Schütz (23) zugeordnet ist, welches im Fehlerfall schließt, sodass über ein Kurzschlussmoment oder ein generatorisches Moment der elektrischen Maschine (11) eine Positionierung der oder jeden ersten rotierenden Baugruppe gegenüber der oder jeder zweiten rotierenden Baugruppe des rotierenden Systems in eine Sicherheitsposition erfolgt.

6. Elektrischer Stellantrieb nach einem der Ansprüche 1 bis 4, **dadurch gekennzeichnet, dass** zwischen Stator und den Rotor der elektrischen Maschine (11) eine Bremseinrichtung (43) geschaltet ist, welche im Fehlerfall schließt, sodass eine Positionierung der oder jeden ersten rotierenden Baugruppe gegenüber der oder jeder zweiten rotierenden Baugruppe des rotierenden Systems in eine Sicherheitsposition erfolgt.

7. Elektrischer Stellantrieb nach einem der Ansprüche 1 bis 6, **dadurch gekennzeichnet, dass** die elektrische Maschine (11) einerseits die Stellenergie zur Erhöhung oder Reduzierung der Drehzahl des Rotors (15) der elektrischen Maschine gegenüber der Drehzahl des Aktuators (12) und andererseits die Energie zur Bestromung der Bremseinrichtung (26) durch den zwischen dem Stator (13) der elektrischen Maschine (11) und dem Rotor (15) derselben ausgebildeten Luftspalt (18) überträgt.

8. Elektrischer Stellantrieb nach einem der Ansprüche 1 bis 7, **gekennzeichnet durch** mindestens Sensor (32), um die lineare und/oder drehende Positionierung der oder jeden ersten rotierenden Baugruppe gegenüber der oder jeder zweiten rotierenden Baugruppe des rotierenden Systems zu erfassen.

9. Elektrischer Stellantrieb nach einem der Ansprüche 1 bis 8, **gekennzeichnet durch** eine dem Rotor (15) der elektrischen Maschine (11) zugeordnete Betätigungseinrichtung (34), um bei Ausfall der elektrischen Maschine (11) die lineare und/oder drehende Positionierung der oder jeden ersten rotierenden Baugruppe gegenüber der oder jeder zweiten rotierenden Baugruppe des rotierenden Systems manuell vorzunehmen.

10. Elektrischer Stellantrieb nach einem der Ansprüche 1 bis 9, **gekennzeichnet durch** eine Drehdurchführung (39) zur fluidischen Versorgung des rotierenden Systems.

## Claims

1. Electric actuating drive of a rotating system for positioning at least a first component of the rotating system with respect to at least a second component of the rotating system, having an electric machine (11) with a stator (13) and a rotor (15) with windings (25), and having an actuator (12), the rotor (15) of the electric machine (11) and the actuator (12) being coupled to each other in such a way that in a first current feed condition of the electric machine (11), the rotor (15) of the same and the actuator (12) rotate at identical speeds, and that in a second current feed condition of the electric machine (11), the rotor (15) of the same and the actuator (12) rotate at different speeds, it being possible for linear and/or rotating positioning of the or each first rotating component with respect to the or each second rotating component of the rotating system to be performed via the actuating drive when the rotor (15) of the electric machine (11) and the actuator (12) rotate at different speeds, and the electric machine (11) transmitting the actuating energy for increasing or reducing the speed of the rotor (15) of the electric machine with respect to the speed of the actuator (12) through an air gap (18) formed between the stator (13) of the electric machine (11) and the rotor (15) of the same, and having a braking device (26) which is assigned to the actuator (12) and which, in a first current feed condition, in particular in a non-energized condition, prevents the linear and/or rotating positioning of the same via the actuating drive and, in a second current feed condition, permits the same,
**characterized in that** the electric machine (11) is formed as an asynchronous machine, and the windings (25) of the rotor (15) are coupled to a rectifier (27) which rotates together with the rotor (15) and which converts an alternating voltage induced in the windings (25) of the rotor into a direct voltage for feeding the braking device (26).

2. Electric actuating drive according to Claim 1, **characterized in that** the actuator (12) comprises a threaded spindle (20) and a spindle nut (21) mounted on the same.

3. Electric actuating drive according to Claim 1, **characterized in that** the rotor of the electric machine and the actuator are coupled via a transmission gear.

4. Electric actuating drive according to Claim 1, **characterized in that** the rotor of the electric machine and the actuator are coupled via a fluid transformer.

5. Electric actuating drive according to one of Claims 1 to 4, **characterized in that** windings (14) of the stator of the electric machine (11) are assigned a contactor (23) which closes in the event of a fault, so that positioning of the or the first rotating component with respect to the or the second rotating component of the rotating system into a safety position is carried out via a short-circuit torque or a regenerative torque of the electric machine (11).

6. Electric actuating drive according to one of Claims 1 to 4, **characterized in that** a braking device (43) is connected between the stator and the rotor of the electric machine (11) and closes in the event of a fault, so that positioning of the or each first rotating component with respect to the or each second rotating component of the rotating system into a safety position is carried out.

7. Electric actuating drive according to one of Claims 1 to 6, **characterized in that** the electric machine (11) on the one hand transmits the actuating energy for increasing or reducing the speed of the rotor (15) of the electric machine with respect to the speed of the actuator (12), and on the other hand transmits the energy for feeding the braking device (26) through the air gap (18) formed between the stator (13) of the electric machine (11) and the rotor (15) of the same.

8. Electric actuating drive according to one of Claims 1 to 7, **characterized by** at least one sensor (32) in order to detect the linear and/or rotational positioning of the or each first rotating component with respect to the or each second rotating component of the rotating system.

9. Electric actuating drive according to one of Claims 1 to 8, **characterized by** an actuating device (34) assigned to the rotor (15) of the electric machine (11) in order, in the event of failure of the electric machine (11), to perform the linear and/or rotational positioning of the or each first rotating component with respect to the or each second rotating component of the rotating system manually.

10. Electric actuating drive according to one of Claims 1 to 9, **characterized by** a rotary lead-through (39) for the fluid supply to the rotating system.

## Revendications

1. Servomoteur électrique d'un système rotatif pour le positionnement d'au moins un premier module du système rotatif par rapport à au moins un deuxième module du système rotatif, comprenant une machine électrique (11) présentant un stator (13) et un rotor (15) avec des enroulements (25) et comprenant un actionneur (12), le rotor (15) de la machine électrique (11) et l'actionneur (12) étant accouplés l'un à l'autre de telle sorte que dans un premier état d'alimentation électrique de la machine électrique (11), son rotor (15) et l'actionneur (12) tournent à une vitesse de rotation identique, et que dans un deuxième état d'alimentation électrique de la machine électrique (11), son rotor (15) et l'actionneur (12) tournent à des vitesses de rotation différentes, et, lorsque le rotor (15) de la machine électrique (11) et l'actionneur (12) tournent à des vitesses de rotation différentes, le servomoteur permettant ainsi d'effectuer un positionnement linéaire et/ou rotatif du ou de chaque premier module rotatif par rapport au ou à chaque deuxième module rotatif du système rotatif, et la machine électrique (11) transmettant l'énergie de commande pour augmenter ou réduire la vitesse de rotation du rotor (15) de la machine électrique par rapport à la vitesse de rotation de l'actionneur (12) par un entrefer (18) réalisé entre le stator (13) de la machine électrique (11) et son rotor (15), et comprenant un système de freinage (26) associé à l'actionneur (12), lequel, dans un premier état d'alimentation électrique, en particulier dans un état non alimenté, de celui-ci, empêche le positionnement linéaire et/ou rotatif par le servomoteur, et dans un deuxième état d'alimentation électrique, permet ce positionnement, **caractérisé en ce que** la machine électrique (11) est réalisée sous forme de machine asynchrone, et les enroulements (25) du rotor (15) sont accouplés à un redresseur (27) tournant conjointement avec le rotor (15), qui convertit une tension alternative induite dans les enroulements (25) du rotor en une tension continue pour l'alimentation électrique du système de freinage (26).

2. Servomoteur électrique selon la revendication 1, **caractérisé en ce que** l'actionneur (12) comprend une broche filetée (20) et un écrou de broche (21) supporté sur celle-ci.

3. Servomoteur électrique selon la revendication 1, **caractérisé en ce que** le rotor de la machine électrique et l'actionneur sont accouplés par le biais d'un démultiplicateur.

4. Servomoteur électrique selon la revendication 1, **caractérisé en ce que** le rotor de la machine électrique et l'actionneur sont accouplés par le biais d'un dispositif de transfert de fluide.

5. Servomoteur électrique selon l'une quelconque des revendications 1 à 4, **caractérisé en ce que** des enroulements (14) du stator de la machine électrique (11) sont associés à un contacteur (23) qui se ferme en cas de panne, de telle sorte que par le biais d'un couple de court-circuit ou d'un couple générateur de la machine électrique (11), il se produise un positionnement du ou de chaque premier module rotatif par rapport au ou à chaque deuxième module rotatif du système rotatif dans une position de sécurité.

6. Servomoteur électrique selon l'une quelconque des revendications 1 à 4, **caractérisé en ce qu'**un système de freinage (43) est branché entre le stator et le rotor de la machine électrique (11), lequel se ferme en cas de panne, de telle sorte qu'il se produise un positionnement du ou de chaque premier module rotatif par rapport au ou à chaque deuxième module rotatif du système rotatif dans une position de sécurité.

7. Servomoteur électrique selon l'une quelconque des revendications 1 à 6, **caractérisé en ce que** la machine électrique (11) transmet d'une part l'énergie de commande pour augmenter ou réduire la vitesse de rotation du rotor (15) de la machine électrique par rapport à la vitesse de rotation de l'actionneur (12) et d'autre part l'énergie pour l'alimentation électrique du système de freinage (26) par l'entrefer (18) réalisé entre le stator (13) de la machine électrique (11) et son rotor (15).

8. Servomoteur électrique selon l'une quelconque des revendications 1 à 7, **caractérisé par** au moins un capteur (32) pour détecter le positionnement linéaire et/ou rotatif du ou de chaque premier module rotatif par rapport au ou à chaque deuxième module rotatif du système rotatif.

9. Servomoteur électrique selon l'une quelconque des revendications 1 à 8, **caractérisé par** un système d'actionnement (34) associé au rotor (15) de la machine électrique (11), pour effectuer manuellement, en cas de panne de la machine électrique (11), le positionnement linéaire et/ou rotatif du ou de chaque premier module rotatif par rapport au ou à chaque deuxième module rotatif du système rotatif.

10. Servomoteur électrique selon l'une quelconque des revendications 1 à 9, **caractérisé par** un passage rotatif (39) pour l'alimentation fluidique du système rotatif.
